# EUROPEAN PATENT SPECIFICATION

(11) **EP 2 827 178 B1**
(45) Date of publication and mention of the grant of the patent: **31.05.2017**
(21) Application number: 13306015.2
(22) Date of filing: 16.07.2013
(51) Int. Cl.: G02B 6/14, G02B 6/293, G02B 6/34, G02B 6/28, H04J 14/04

(54) **Mode converter for an optical spatial multiplexing system**
Moduswandler für ein optisches räumliches Multiplexsystem
Convertisseur de mode pour un système de multiplexage spatial optique

(43) Date of publication of application: 21.01.2015
(73) Proprietor: ALCATEL LUCENT, 92100 Boulogne-Billancourt (FR)
(72) Inventor: Franz, Bernd, 70435 Stuttgart (DE)
(74) Representative: Wetzel, Emmanuelle

(56) References cited:
- EP-A1- 2 437 089
- WO-A1-03/050581
- DONGHUA GU ET AL: "Multi-mode multi-channel fiber dispersion compensation using spatial-spectral holography", LEOS SUMMER TOPICAL MEETINGS, 2005 DIGEST OF THE SAN DIEGO, CA, USA JULY 25-27, 2005, PISCATAWAY, NJ, USA,IEEE, 25 July 2005 (2005-07-25), pages 189-190, XP010847892, DOI: 10.1109/LEOSST.2005.1528057 ISBN: 978-0-7803-8981-6
- BLAU M ET AL: "Optimization of Spatial Aperture-Sampled Mode Multiplexer for a Three-Mode Fiber", IEEE PHOTONICS TECHNOLOGY LETTERS, IEEE SERVICE CENTER, PISCATAWAY, NJ, US, vol. 24, no. 23, 1 December 2012 (2012-12-01), pages 2101-2104, XP011488529, ISSN: 1041-1135, DOI: 10.1109/LPT.2012.2220536
- MIRI BLAU ET AL: "Optimization of spatial aperture-sampled mode multiplexer for a few mode fiber", ELECTRICAL & ELECTRONICS ENGINEERS IN ISRAEL (IEEEI), 2012 IEEE 27TH CONVENTION OF, IEEE, 14 November 2012 (2012-11-14), pages 1-4, XP032277784, DOI: 10.1109/EEEI.2012.6377019 ISBN: 978-1-4673-4682-5

## Description

The present document relates to an optical transmission system using multi mode fibers. In particular, the present document relates to a system for coupling light into and out from multi mode fibers by performing spatial multiplex.

Multi mode fibers (MMF) exhibit a higher transport capacity limit than single mode fibers (SMF), provided the various optical modes can be exploited as independent communication channels with individual scattering paths. It is a technical problem to find economical and efficient means to couple the light from one or more transmitters to the MMF and from the MMF to one or more receivers. The coupling or mode conversion should be performed with very low modal crosstalk. This is particularly relevant in optical spatial multiplexing systems using direct detection, because such systems typically do not make use of MIMO (multiple input multiple output) processing. Usually, the transmitters and receivers are equipped with single mode fibers, such that a technical problem is to provide a method and device for coupling the light of one or more SMFs into a MMF (at the transmitter side), as well as for coupling the light of the MMF to one or more SMFs (at the receiver side).

EP 2 437 089 A1 discloses an optical transmission system over multimode fiber using multiple-input-multiple-output (MIMO) techniques.

XP010847892 describes multi-mode multi-channel fiber dispersion compensation using spatial-spectral holography.

According to the invention as defined by claim 1, an optical coupling device is configured to couple a light beam, which has been derived from a single mode light source i.e. a single mode light waveguide) (e.g. from a single mode fiber) into a target mode of a multi mode waveguide (e.g. of a multi mode fiber). In particular, the multi mode waveguide is configured to guide a plurality of optical mode groups, and the target mode corresponds to a selected one of the modes of one of the plurality of optical mode groups. The target mode may correspond to or may be an LPₓ₁ mode, with x greater or equal to 1.

The target mode may exhibit a mode pattern comprising a plurality of energy spots in a pre-determined arrangement and with pre-determined phases. By way of example, in case of LPₓ₁ modes, the plurality of energy spots may be arranged on a circle around the optical axis of the multi mode waveguide. As such, the pre-determined arrangement may correspond to or may be an arrangement of a pre-determined number of spots (e.g. 2x spots) at equidistance with respect to one another on a circle around the optical axis of the multi mode waveguide. The plurality of energy spots may have or may be associated with a respective plurality of phases. In case of LPₓ₁ modes, a pair of adjacent energy spots on the circle may have opposed phases. As such, the phases of the energy spots may alternate between 0 and π for increasing azimuth angle on the circle around the optical axis.

The optical coupling device may comprise an input interface configured to fix a face of the single mode light waveguide at the optical axis of the optical coupling device. Furthermore, the optical coupling device may comprise a first lens configured to collimate light emitted from the face of the single mode light waveguide, to yield a light beam. The light beam may be a collimated light beam, i.e. the light beam may comprise collimated light. The input interface may be configured to fix the face of the single mode light waveguide at a pre-determined distance from the first lens. The pre-determined distance may correspond to the focal length of the first lens. The optical axis of the first lens may correspond to the optical axis of the optical coupling device.

The optical coupling device comprises a first diffractive optical element configured to split the light beam into a plurality of split beams. The split beams may correspond to or may be collimated light beams. An arrangement of the plurality of split beams corresponds to the pre-determined arrangement of the plurality of energy spots of the mode pattern. Furthermore, a number of split beams may correspond to a number of energy spots of the mode pattern. By way of example, the mode pattern may comprise two, four, six or more energy spots. As such, the first diffractive optical element may be configured to generate two, four, six or more corresponding split beams. Hence, each of the plurality of split beams may correspond to one of the plurality of energy spots of the mode pattern of the target mode. In other words, there may be a one to one correspondence between the plurality of split beams and the plurality of energy spots.

The first diffractive optical element may be configured to split the light beam into the plurality of split beams, wherein the plurality of slit beams has a corresponding plurality of different directions of propagation. All directions of propagation may be different from one another. That is, the plurality of split beams may each have a different direction of propagation. The plurality of different directions of propagation may be associated with the pre-determined arrangement of the plurality of energy spots of the mode pattern. In particular, each direction of the plurality of different directions of propagation may exhibit a direction azimuth angle with respect to the optical axis of the optical coupling device. In a similar manner, each energy spot of the mode pattern may be located at a corresponding spot azimuth angle within the pre-determined arrangement. The direction azimuth angle of a direction may correspond to the spot azimuth angle of the corresponding energy spot. In other words, the direction azimuth angles of the plurality of directions of propagation may correspond to the spot azimuth angles of the plurality of energy spots, respectively.

The optical coupling device comprises a second diffractive optical element configured to modify one or more phases of the plurality of split beams to yield a plurality of phase shifted beams. The phase shifted beams may be collimated light beams. The phases of the plurality of phase shifted beams correspond to the pre-determined phases of the plurality of energy spots of the mode pattern, respectively. As such, the second diffractive optical element may be configured to adjust the phases of the plurality of split beams such that both, the arrangement and the phases of the plurality of phase shifted beams correspond to the pre-determined arrangement and the pre-determined phases of the plurality of energy spots.

The second diffractive optical element may comprise a plurality of phase shift units for the plurality of split beams, respectively. One or more of the plurality of phase shift units may have a width and/or a refractive index which differs from the others of the plurality of phase shift units, to modify the phase of the corresponding one or more split beams, relative to the phase of the others of the plurality of split beams.

Light derived from the plurality of phase shifted beams may be coupled into the target mode of the multi mode waveguide. For this purpose, the second diffractive optical element may be configured to re-direct the plurality of phase shifted beams to the optical axis of the optical coupling device, to yield a plurality of redirected beams. The redirected beams may be collimated light beams.

It has been shown experimentally that by transforming the light beam from the single mode light source into the plurality of redirected beams using a two step approach, the coupling efficiency can be significantly increased whereas the modal crosstalk is significantly reduced. The two step approach comprises a first step within which a plurality of split beams are generated to (only) mimic the spatial arrangement of the target mode, and a second step within which the phases of the plurality of split beams are modified to (also) mimic the phases of the target mode.

The first and/or the second diffractive optical elements may comprise one or more gratings. In particular, the first diffractive optical element may comprise a grating (e.g. a Dammann grating) in order to split the light beam into the plurality of split beams. In a similar manner, the second diffractive optical element (also referred to as a second diffractive optical element) may comprise a grating (e.g. a blazed grating) in order to re-direct the plurality of (phase shifted) beams. Furthermore, the second diffractive optical element may comprise the plurality of phase shift units for generating the azimuthally alternating phases of the plurality of (phase shifted) beams. It should be noted that the shifting of the phase and the redirection of the plurality of beams may be performed in an overlaid manner using a single (i.e. the second) diffractive optical element (e.g. using an LCOS, Liquid crystal on silicon, device).

A distance between the first and the second diffractive optical elements may be selected such that an optical energy between any pair of split beams from the plurality of split beams is at or falls below a pre-determined energy threshold. The energy threshold may be substantially zero. In other words, the distance between the first and the second diffractive optical elements may be selected such that the plurality of split beams are separated from one another (i.e. do not overlap) when falling onto the second diffractive optical element.

The optical coupling device may further comprise a second lens configured to focus the plurality of redirected beams onto a corresponding plurality of spots on a face of the multi mode waveguide. Furthermore, the optical coupling device may comprise an output interface configured to fix the face of the multi mode waveguide at the optical axis of the optical coupling device at a pre-determined distance from the second lens. The pre-determined distance may correspond to the focal length of the second lens. As such, the second diffractive optical element may be configured to re-direct the plurality of phase shifted beams to the optical axis of the second lens (which typically corresponds to the optical axis of the optical coupling device).

It should be noted that the optical coupling device may be configured to operate in a bi-directional manner. As such, light from a mode of the multi mode waveguide may be coupled into a single mode waveguide using the above mentioned optical coupling device.

According to the invention as defined by claim 15, an optical coupling device is described which is configured to couple a plurality of phase shifted light beams derived from a source mode of a multi mode waveguide (e.g. a multi mode fiber) into a single mode light drain (e.g. a single mode fiber). The plurality of phase shifted light beams have pre-determined phases and are arranged according to a pre-determined arrangement. The pre-determined phases and the pre-determined arrangement correspond to the arrangement and/or phases of a plurality of energy spots of a mode pattern of the source mode.

The optical coupling device comprises a second diffractive optical element (e.g. the second diffractive optical element described in the present document) configured to modify one or more phases of the plurality of phase shifted beams to yield a plurality of split beams. The plurality of split beams have a (substantially) common phase. Furthermore, the plurality of split beams are directed at the optical axis of the optical coupling device. In addition, the optical coupling device comprises a first diffractive optical element (e.g. the first diffractive optical element described in the present document) configured to join the plurality of split beams into a single light beam. Light from the single light beam are coupled to the single mode light drain.

It should be noted that the systems including its preferred embodiments as outlined in the present patent application may be used stand-alone or in combination as defined by appended claims.

The invention is explained below in an exemplary manner with reference to the accompanying drawings, wherein
Fig. 1a shows a block diagram of an example 4f-correlator;
Fig. 1b shows an example phase mask of a 4f-correlator;
Fig. 2 shows a block diagram of an example mode coupling device;
Figs. 3a and 3b show example profiles of light at the input face of a multi-mode fiber; and
Figs. 4a and 4b illustrate the coupling efficiency of a 4f-correlator and of the mode coupling device described in the present document.

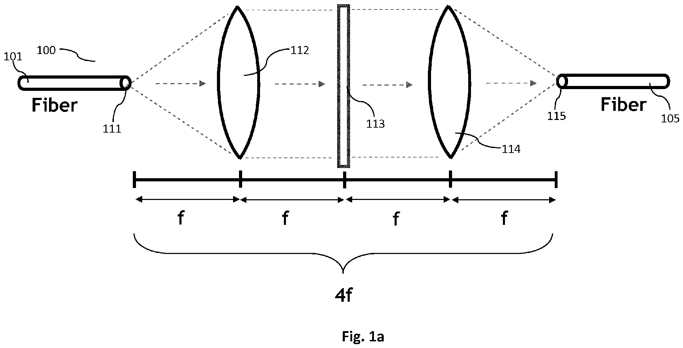

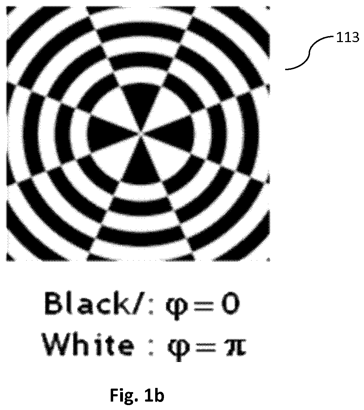

As outlined in the introductory section of the present document, it is desirable to provide a mode coupling device which is configured to couple (modulated) light from a single mode fiber (SMF) into a mode or into a mode group of a multi mode fiber (MMF). A possible solution for such a mode coupling device is the use of a phase mask in the Fourier plane of a 4f-correlator. Such a 4f-correlator 100 is illustrated in Fig. 1a. The first lens 112 performs a 2-dimensional-Fourier transform of the spatial mode function at the output 111 of the single mode fiber 101, thereby yielding a field or Fourier transform in the spatial frequency domain. The resulting field is then spatially filtered by a mask 113 that provides a variable phase of the light as a function of the spatial frequency coordinate. This mask 113 may be designed in order to obtain the desired profile for a corresponding propagation mode of the MMF 105. An example profile of a mask 113 for an LP₂₁ mode is illustrated in Fig. 1b. Finally, the diffracted output field of mask 113 is transformed backwards into the spatial domain by another lens 114 and sent to the input face 115 of a multi mode fiber 105.

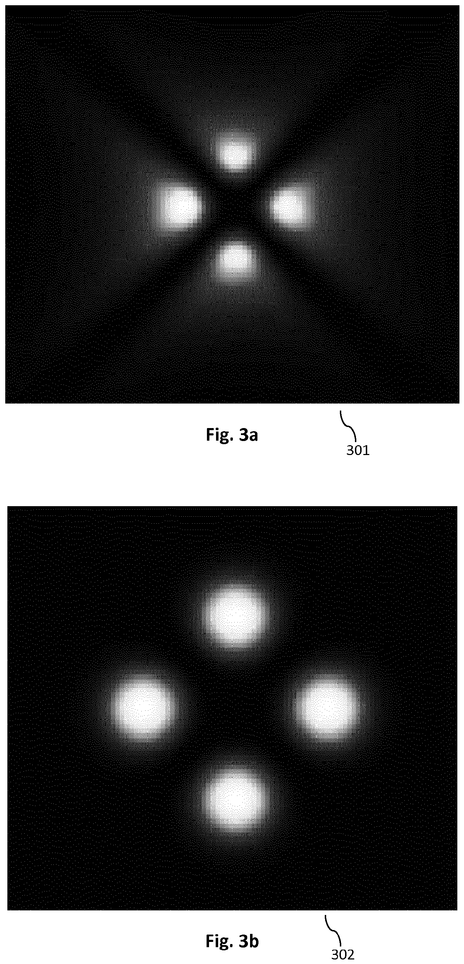

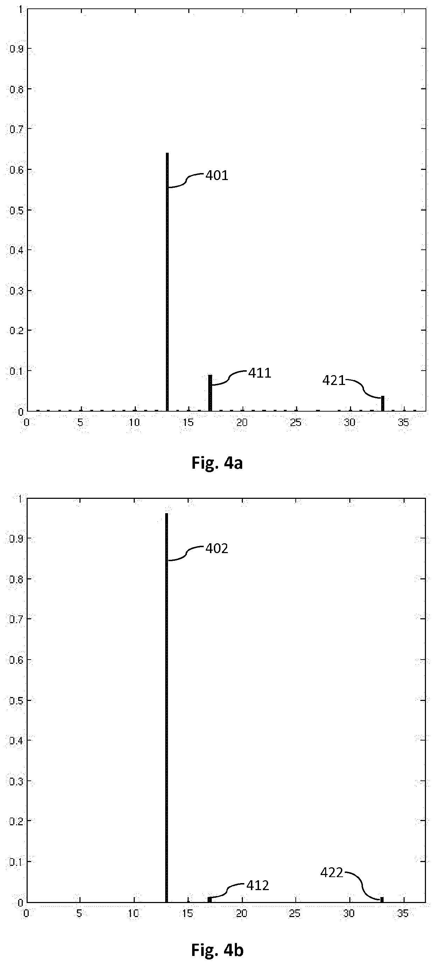

The use of a 4f-correlator 100 is not optimum in efficiency and modal crosstalk (as can be seen from Figs. 3a and 4a). An improved solution may be to apply a phase mask generated with a so-called 'simulated annealing' algorithm, which can produce low modal crosstalk, however, at the expense of a reduced conversion efficiency of only 20-26%.

For the excitation of mode groups it is typically sufficient to generate and excite the LPₓ₁ mode (x being an integer with x>0), which belongs to the desired mode group. This is particularly true for graded index multi mode fibers, for which the modes of a mode group have substantially the same propagation speed and therefore couple easily along the fiber. As a consequence of this, the different modes of a mode group are excited by the LPₓ₁ mode of the mode group.

It is proposed in the present document to not only use a single collimated SMF beam as an input for the phase mask (as is the case of a 4f-correlator 100), but a plurality of collimated SMF beams, which are derived from the single SMF beam at the output face 111 of the SMF 101. The plurality of collimated SMF beams may be arranged in such a way that the desired mode (e.g. the desired LPₓ₁ mode) is excited. For this purpose, the number of the collimated beams and the phases of the different collimated beams may be adapted in accordance to the desired mode which is to be excited. By way of example, the excitation of the LP₂₁ and LP₆₁ mode typically requires 4 and 12 collimated light beams, respectively.

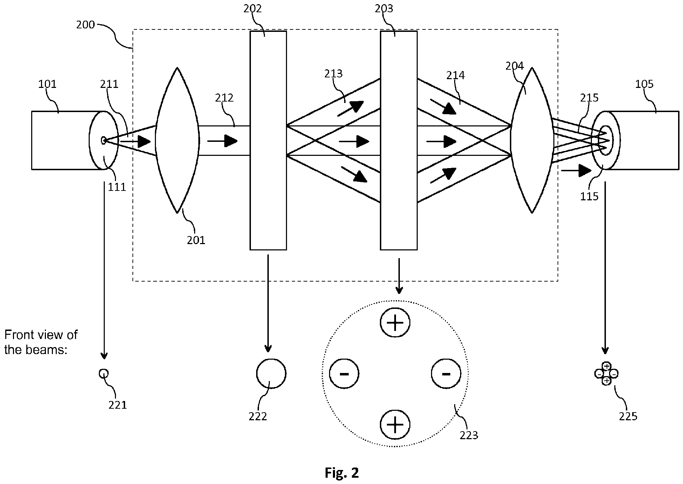

Fig. 2 shows a block diagram of an example mode coupling device 200. The mode coupling device 200 may be configured to excite the LPₓ₁ mode with a coupling or conversion efficiency of nearly 100% and with low modal crosstalk. The mode coupling device 200 of Fig. 2 is configured to excite the LP₂₁ mode. The outgoing light 211 of the SMF 101 may be collimated by a first lens 201 to yield a collimated light beam 212. The propagation directions of the light beams are indicated in Fig. 2 by arrows.

The collimated light beam 212 may be distributed (or split up) by a first diffractive optical element (DOE) 202 to form a plurality of light beams 213 (referred to as a plurality of slit beams). In the illustrated example, four light beams 213 are generated by the first DOE 202. The first DOE 202 may comprise a beam splitting device such as a Dammann grating. The first DOE 202 of Fig. 2 comprises a 1-to-4 beam splitter in order to generate the four split beams 213 (for excitation of the four energy spots of the LP₂₁ mode).

The cross-section of a mode of an MMF 105 typically comprises a plurality of spots with high optical energy. In other words, the mode of an MMF 105 typically exhibits are mode pattern comprising a plurality of energy spots at a plurality of different spatial positions across the cross-section 115 of the MMF 105. The positions and/or the phases of the plurality of energy spots may vary from mode to mode. By way of example, the mode pattern of an LP₂₁ mode comprises four energy spots which are arranged at equidistance on a single circle around the center of the MMF 105. The relative phases of the four energy spots are alternating between 0 and π. It should be noted that in the present document the term "phase" typically refers to a relative phase of a light beam (relative to the phase of another light beam of the plurality of light beams). The absolute value of the phase of a light beam is typically not known at the mode coupling device 200.

In a similar manner to the LP₂₁ mode, the mode pattern of an LP₃₁ mode comprises six energy spots which are arranged at equidistance on a single circle around the center of the MMF 105. The phases of the six energy spots are alternating between 0 and π. In general terms, an LPₓ₁ mode comprises 2x energy spots which are arranged at equidistance on a single circle around the center of the MMF 105. The phases of the 2x energy spots are alternating between 0 and π.

The first DOE 202 may be configured to split the collimated beam 212 in such a manner that the collimated beam 212 is split into a number of split beams 213, which corresponds to the number of energy spots of the mode pattern of the mode which is to be excited (i.e. of the target mode). Furthermore, the first DOE 202 may be configured to split the collimated beam 212 such that the plurality of split beams 213 are arranged in accordance to the plurality of energy spots of the mode pattern of the mode which is to be excited. If an LPₓ₁ mode is to be excited, then the first DOE 202 may be configured to generate 2x split beams 213 from the single collimated beam 212, wherein the 2x split beams are arranged at equidistance on a single circle.

This is illustrated in Fig. 2, wherein the light 211 at the output of the SMF 101 (having the front view or cross-section 221) is collimated using the first lens 201. The cross-section 222 of the collimated beam 212 is shown at the bottom of Fig. 2. Using the first DOE 202, the plurality of split beams 213 is generated such that the cross-section of the plurality of split beams 213 corresponds to the cross-section 223 shown in Fig. 2. In contrast to what is shown in Fig. 2, the plurality of split beams 213 typically have the same phase upon arrival at a second DOE 203 of the mode coupling device 200. The phases of the plurality split beams 213 are typically modified by the second DOE 203 in order to align the phases of the plurality of beams to the phases of the plurality of energy spots.

The distance between the first DOE 202 and the second DOE 203 may be such that spatially separated light beams are obtained at the input of the second DOE 203. In other words, the distance between the first DOE 202 and the second DOE 203 may be such that the optical energy between two adjacent ones of the plurality of split beams 213 is at or below a pre-determined energy threshold. By doing this, it is ensured that a clearly distinct mode pattern may be created at the input 115 of the MMF 105.

The second DOE 203 may be configured to apply a phase shift to one or more of the plurality of split beams 213. In particular, the second DOE 203 may be configured to apply a phase shift to the plurality of split beams 213 such that the phase differences between the plurality of phase shifted split beams correspond to the phase differences between the energy spots of the mode which is to be excited by the mode coupling device 200. In other words, the second DOE 203 may be configured to apply a phase shift to the plurality of split beams 213 such that the relative phases among the plurality of phase shifted split beams correspond to the relative phases among the plurality of energy spots of the target mode. As such, the first DOE 203 may be configured to provide a plurality of split beams 213 which mimics the mode pattern of the mode which is to be excited by the mode coupling device 200, and the second DOE 203 may be configured to adjust the phases of the plurality of split beams 213 in accordance to the mode pattern of the mode which is to be excited by the mode coupling device 200.

By way of example, in case of an LPₓ₁ mode, the second DOE 203 may be configured to apply a phase shift of π to every second beam of the plurality of split beams 213, counted in azimuthal direction. In case of an LP₂₁ mode the cross-section of the plurality of phase shifted split beams corresponds to the cross-section 223 shown in Fig. 2. The phase shift may be applied by submitting the split beams to different propagation delays (e.g. using material having locally a different refractive index and/or having different widths).

Furthermore, the second DOE 203 may be configured to direct the plurality of phase shifted beams to the optical axis of a second lens 204 of the mode coupling device 200, thereby yielding a plurality of redirected beams 214. For this purpose, the second DOE 203 may comprise blazed gratings for each beam. Fig. 2 depicts the plurality of redirected beams 214, wherein the plurality of redirected beams 214 is directed at the optical axis of the second lens 204. The second lens 204 is configured to focus the plurality of redirected (collimated) beams 214 onto different spots on the input face 115 of the MMF 105. For this purpose, the second lens 204 may be positioned at one focal length apart from the MMF 105.

As such, the second lens 204 may be configured to transform the plurality of redirected beams 214 into a plurality of focused beams 215 which, at the input face 115 of the MMF 105, correspond to the mode pattern of the mode which is to be excited by the mode coupling device 200. In case of an LPₓ₁ mode, the plurality of focused beams 215 corresponds to a ring of beams with alternating phases, which appear at the face 115 of the MMF 105. The cross-section 225 of the plurality of focused beams 215 is shown in Fig. 2 for an LP₂₁ mode.

Figs. 3a and 3b show example cross-sections 301, 302 of beams generated by a 4f-correlator 100 and by a mode coupling device 200, respectively. It can be seen that the cross-section 302 of the plurality of focused beams 215 which has been generated using the mode coupling device 200 comprises energy spots which are more distinct than the energy spots of the cross-section 301. This leads to an improved coupling efficiency and to a reduced crosstalk between different modes or mode groups.

It can be shown from Fig. 4a that in case of an LP₂₁ mode, the 4f-correlator 100 provides an efficiency of the mode conversion of 64%. Crosstalk from the LP₂₃ mode is -9 dB, crosstalk from the LP₆₁ mode is -12 dB, and crosstalk from the LP₀₁ mode is -27 dB. Furthermore, Fig. 4a shows the energy 401 of the LP₂₁ mode, and the fact that a substantial amount of energy 411, 421 is coupled to the LP₂₃ mode and the LP₆₁ mode, respectively.

On the other hand, the mode coupling device 200 of Fig. 2 provides an efficiency of mode conversion of 97%. Crosstalk from the LP₆₁ mode is -22 dB, crosstalk from the LP₂₃ mode is -22 dB, and crosstalk from the LP₂₂ mode is -27 dB. This can be seen in Fig. 4b. In particular, it can be seen that apart from the energy 402 of the LP₂₁ mode, only a small amount of energy 412, 422 is coupled to the LP₂₃ mode and the LP₆₁ mode, respectively. As such, the mode coupling device 200 which is described in the present document provides for a significant performance improvement with regards to coupling efficiency and crosstalk reduction. This performance improvement with respect to the 4f-correlator further increases with higher azimuthal order of the LP modes.

Hence, in the present document a mode coupling device has been described which provides for an improved conversion efficiency (of nearly 100%) in combination with reduced modal crosstalk.

It should be noted that the description and drawings merely illustrate the principles of the proposed methods and systems. It will thus be appreciated that those skilled in the art will be able to devise various arrangements that, although not explicitly described or shown herein, embody the principles of the invention and are included within its scope as defined by the claims. Furthermore, all examples recited herein are principally intended expressly to be only for pedagogical purposes to aid the reader in understanding the principles of the proposed methods and systems and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Furthermore, it should be noted that any block diagrams herein represent conceptual views of illustrative circuitry embodying the principles of the invention.

## Claims

1. An optical coupling device (200) configured to couple a light beam (211, 212) from a single mode light waveguide (101) into a target mode of a multi mode waveguide (105), wherein the target mode exhibits a mode pattern comprising a plurality of energy spots in a pre-determined arrangement and with pre-determined phases, the optical coupling device (200) comprising
- a first diffractive optical element (202) configured to split the light beam (212) into a plurality of split beams (213), such that an arrangement of the plurality of split beams (213) corresponds to the pre-determined arrangement of the plurality of energy spots of the mode pattern; and
- a second diffractive optical element (203) configured to modify one or more phases of the plurality of split beams (213) to yield a plurality of phase shifted beams, wherein phases of the plurality of phase shifted beams correspond to the pre-determined phases of the plurality of energy spots of the mode pattern, respectively, and wherein light derived from the plurality of phase shifted beams is configured to be coupled into the target mode of the multi mode waveguide.

2. The optical coupling device (200) of claim 1, wherein a number of split beams (213) corresponds to a number of energy spots of the mode pattern.

3. The optical coupling device (200) of claim 2, wherein the number of energy spots of the mode pattern is two, four, six or more.

4. The optical coupling device (200) of any previous claim, wherein the first and/or the second diffractive optical elements (201, 202) comprise a grating.

5. The optical coupling device (200) of any previous claim, wherein
- the first diffractive optical element (202) is configured to split the light beam (212) into the plurality of split beams (213) having a corresponding plurality of different directions of propagation, and
- the plurality of different directions of propagation is associated with the pre-determined arrangement of the plurality of energy spots of the mode pattern.

6. The optical coupling device (200) of claim 5, wherein
- each direction of the plurality of different directions of propagation exhibits a direction azimuth angle with respect to an optical axis of the optical coupling device (200);
- each energy spot of the mode pattern is located at a corresponding spot azimuth angle within the pre-determined arrangement; and
- the direction azimuth angle of a direction corresponds to the spot azimuth angle of the corresponding energy spot.

7. The optical coupling device (200) of any previous claim, wherein each of the plurality of split beams (213) corresponds to one of the plurality of energy spots of the mode pattern.

8. The optical coupling device (200) of any previous claim, wherein a distance between the first and the second diffractive optical elements (201, 202) is such that an optical energy between any pair of split beams from the plurality of split beams (213) is at or falls below a pre-determined energy threshold.

9. The optical coupling device (200) of any previous claim, wherein
- the second diffractive optical element (203) comprises a plurality of phase shift units for the plurality of split beams (213), respectively; and
- one or more of the plurality of phase shift units have a width and/or a refractive index which differs from the others of the plurality of phase shift units, to modify the phase of the one or more corresponding slit beams, relative to the phase of the others of the plurality of split beams.

10. The optical coupling device (200) of any previous claim, wherein the second diffractive optical element (203) is further configured to re-direct the plurality of phase shifted beams to an optical axis of the optical coupling device (200), to yield a plurality of redirected beams (214).

11. The optical coupling device (200) of claim 10, further comprising
- a second lens (204) configured to focus the plurality of redirected beams (214) onto a corresponding plurality of spots on a face (115) of the multi mode waveguide (105); and
- an output interface configured to fix the face (115) of the multi mode waveguide (105) at an optical axis of the optical coupling device (200) at a pre-determined distance from the second lens (204).

12. The optical coupling device (200) of any of claims 10 to 11, wherein the second diffractive optical element (203) is configured to re-direct the plurality of phase shifted beams to an optical axis of the second lens (204).

13. The optical coupling device (200) of any previous claim, further comprising
- an input interface configured to fix a face (111) of the single mode light waveguide (101) at an optical axis of the optical coupling device (200); and
- a first lens (201) configured to collimate light emitted from the face (111) of the single mode light waveguide (101), to yield the light beam (212), wherein the input interface is configured to fix the face (111) of the single mode light waveguide (101) at a pre-determined distance from the first lens (201).

14. The optical coupling device (200) of any previous claim, wherein
- the single mode light waveguide (101) comprises a single mode fiber; and/or
- the multi mode waveguide (105) comprises a multi mode fiber; and/or
- the multi mode waveguide (105) is configured to guide a plurality of optical mode groups, and wherein the target mode corresponds to a selected one of the modes of an optical mode group.

15. An optical coupling device (200) configured to couple a plurality of phase shifted light beams derived from a source mode of a multi mode waveguide into a single mode light drain (101), wherein the plurality of phase shifted light beams have pre-determined phases and are arranged according to a pre-determined arrangement, according to a corresponding plurality of energy spots of a mode pattern of the source mode, the optical coupling device (200) comprising
- a second diffractive optical element (203) configured to modify one or more phases of the plurality of phase shifted beams to yield a plurality of split beams, such that the plurality of split beams have a substantially common phase and such that the plurality of split beams are directed at an optical axis of the optical coupling device (200); and
- a first diffractive optical element (202) configured to join the plurality of split beams (213) into a single light beam (212), wherein light from the single light beam (212) is configured to be coupled to the single mode light drain (101).

## Patentansprüche

1. Optische Kopplungsvorrichtung (200), konfiguriert für das Koppeln eines Lichtstrahls (211, 212) von einem Einmode-Lichtwellenleiter (101) in einen Zielmodus eines Mehrfachmode-Wellenleiters (105), wobei der Zielmodus ein Vorlagenmuster zeigt, das eine Vielzahl von Energiepunkten in einer vordefinierten Zusammenstellung mit vordefinierten Phasen umfasst, wobei die optische Kopplungsvorrichtung (200) umfasst:
- ein erstes optisches Brechungselement (202), das konfiguriert ist für das Splitten des Lichtstrahls (212) in eine Vielzahl gesplitteter Stahlen (213), dergestalt, dass eine Anordnung der Vielzahl gesplitteter Strahlen (213) der vorbestimmten Anordnung der Vielzahl von Energiepunkten des Vorlagenmusters entspricht; und
- ein zweites optisches Brechungselement (203), das konfiguriert ist für das Modifizieren einer oder mehrerer Phasen aus der Vielzahl gesplitteter Strahlen (213), um eine Vielzahl phasenverschobener Strahlen hervorzubringen, wobei Phasen aus der Vielzahl phasenverschobener Strahlen jeweils den vorbestimmten Phasen aus der Vielzahl von Energiepunkten des Vorlagenmusters entsprechen und wobei Licht, das von der Vielzahl phasenverschobener Strahlen abgeleitet wird, konfiguriert wird, um in den Zielmodus des Mehrfachmode-Wellenleiters gekoppelt zu werden.

2. Die optische Kopplungsvorrichtung (200) nach Anspruch 1, wobei eine Anzahl gesplitteter Strahlen (213) einer Anzahl von Energiepunkten des Vorlagenmusters entspricht.

3. Die optische Kopplungsvorrichtung (200) nach Anspruch 2, wobei die Anzahl der Energiepunkte des Vorlagenmusters zwei, vier, sechs oder mehr beträgt.

4. Die optische Kopplungsvorrichtung (200) nach einem jeglichen der vorgenannten Ansprüche, wobei die ersten und/oder die zweiten optischen Brechungselemente (201, 202) ein Gitter umfassen.

5. Die optische Kopplungsvorrichtung (200) nach einem jeglichen der vorgenannten Ansprüche, wobei
- das erste optische Brechungselement (202) dafür konfiguriert ist, um den Lichtstrahl (212) in die Vielzahl gesplitteter Lichtstrahlen (213) zu brechen, die eine entsprechende Vielzahl verschiedener Ausbreitungsrichtungen haben, und
- wobei die Vielzahl verschiedener Ausbreitungsrichtungen assoziiert ist mit der vorbestimmten Anordnung der Vielzahl von Energiepunkten des Vorlagenmusters.

6. Die optische Kopplungsvorrichtung (200) nach Anspruch 5, wobei
- jede Richtung aus der Vielzahl verschiedener Ausbreitungsrichtungen einen Richtungsazimuthalwinkel bezüglich einer optischen Achse der optischen Kopplungsvorrichtung (200) aufweist;
- jeder Energiepunkt des Vorlagenmusters an einem entsprechenden Punktazimutwinkel innerhalb der vorbestimmten Anordnung liegt; und
- wobei der Richtungsazimutwinkel einer Richtung dem Punktazimutwinkel des entsprechenden Energiepunkts entspricht.

7. Die optische Kopplungsvorrichtung (200) nach einem jeglichen der vorgenannten Ansprüche, wobei jeder aus der Vielzahl gesplitteter Strahlen (213) einem aus der Anzahl von Energiepunkten des Vorlagenmusters entspricht.

8. Die optische Kopplungsvorrichtung (200) nach einem jeglichen der vorgenannten Ansprüche, wobei der Abstand zwischen dem ersten und dem zweiten optischen Brechungselement (201, 202) dergestalt ist, dass eine optische Energie zwischen einem beliebigen Paar gesplitteten Strahlen aus der Vielzahl gesplitteter Strahlen (213) gleich oder niedriger einem vorbestimmten Energiegrenzwert ist.

9. Die optische Kopplungsvorrichtung (200) nach einem jeglichen der vorgenannten Ansprüche, wobei
- das zweite optische Brechungselement (203) eine Vielzahl von Phasenverschiebungseinheiten jeweils für die Vielzahl gesplitteter Strahlen (213) umfasst; und
- wobei eine oder mehrere aus der Vielzahl von Phasenverschiebungseinheiten eine Breite und/oder einen Brechungsindex haben, die von denen der anderen aus der Vielzahl von Phasenverschiebungseinheiten abweichen, um die Phase des einen oder der mehreren entsprechenden, gesplitteten Strahlen im Verhältnis zur Phase der anderen aus der Vielzahl gesplitteter Strahlen zu modifizieren.

10. Die optische Kopplungsvorrichtung (200) nach einem jeglichen der vorgenannten Ansprüche, wobei das zweite optische Brechungselement (203) weiterhin dafür konfiguriert ist, um die Vielzahl phasenverschobener Strahlen auf eine optische Achse der optischen Kopplungsvorrichtung (200) umzuleiten, um eine Vielzahl umgeleiteter Strahlen (214) hervorzubringen.

11. Die optische Kopplungsvorrichtung (200) nach Anspruch 10, weiterhin umfassend:
- eine zweite Linse (204), die konfiguriert ist für das Umleiten von Strahlen (214) auf eine entsprechende Vielzahl von Punkten auf einer Fläche (115) des Mehrfachmode-Wellenleiters (105); und
- eine Ausgangsschnittstelle, die dafür konfiguriert ist, um die Fläche (115) des Multimode-Wellenleiters (105) in einer vorbestimmten Entfernung von der zweiten Linse (204) auf einer optischen Achse der optischen Kopplungsvorrichtung (200) zu fixieren.

12. Die optische Kopplungsvorrichtung (200) nach einem jeglichen der Ansprüche 10 bis 11, wobei das zweite optische Brechungselement (203) dafür konfiguriert ist, um die Vielzahl phasenverschobener Strahlen auf eine optische Achse der zweiten optischen Kopplungsvorrichtung (204) umzuleiten.

13. Die optische Kopplungsvorrichtung (200) nach einem jeglichen der vorgenannten Ansprüche, weiterhin umfassend:
- eine Eingangsschnittstelle, die dafür konfiguriert ist, um eine Fläche (111) des Einzelmode-Wellenleiters (101) auf einer optischen Achse der optischen Kopplungsvorrichtung (200) zu fixieren; und
- eine erste Linse (201), die konfiguriert ist für das Kollimieren von Licht, das von der Fläche (111) des Einzelmode-Wellenleiters (101) gesendet wird, um den Lichtstrahl (212) hervorzubringen, wobei die Eingangsschnittstelle dafür konfiguriert ist, um die Fläche (111) des Einzelmode-Wellenleiters (101) in einer vordefinierten Entfernung von der ersten Linse zu fixieren (201).

14. Die optische Kopplungsvorrichtung (200) nach einem jeglichen der vorgenannten Ansprüche, wobei
- der Einzelmode-Wellenleiter (101) eine Einzelmode-Faser umfasst; und/oder
- der Multimode-Wellenleiter (105) eine Multimode-Faser umfasst; und/oder
- der Multimode-Wellenleiter (105) dafür konfiguriert ist, um eine Vielzahl von Gruppen optischer Modi zu leiten, und wobei der Zielmodus einem ausgewählten Modus der Modi einer Gruppe optischer Modi entspricht.

15. Optische Kopplungsvorrichtung (200), konfiguriert für das Koppeln einer Vielzahl phasenverschobener Lichtstrahlen, die abgeleitet sind von einem Quellmodus eines Multimode-Wellenleiters in einen Einzelmode-Lichtdrain (101), wobei die Vielzahl phasenverschobener Lichtstrahlen vordefinierte Phasen hat und gemäß einer vordefinierten Anordnung angeordnet ist, die einer entsprechenden Vielzahl von Energiepunkten eines Vorlagenmusters des Quellmodus entspricht, wobei die optische Kopplungsvorrichtung (200) umfasst:
- ein zweites optisches Brechungselement (203), das dafür konfiguriert ist, um eine oder mehrere Phasen aus der Vielzahl phasenverschobener Strahlen zu modifizieren, um eine Vielzahl gesplitteten Strahlen hervorzubringen, dergestalt, dass die Vielzahl gesplitteter Strahlen eine im Wesentlichen gemeinsame Phase hat, und dergestalt, dass die Vielzahl gesplitteter Strahlen auf eine optische Achse der optischen Kopplungsvorrichtung (200) gerichtet wird; und
- ein erstes optisches Brechungselement (202), das dafür konfiguriert ist, um die Vielzahl gesplitteter Strahlen (213) in einem einzigen Lichtstrahl (212) zusammenzuführen, wobei Licht aus dem einzigen Lichtstrahl (212) dafür konfiguriert ist, um mit dem Einzelmode-Lichtdrain (101) gekoppelt zu werden.

## Revendications

1. Dispositif de couplage optique (200) configuré pour coupler un faisceau lumineux (211, 212) provenant d'un guide d'ondes lumineuses monomode (101) dans un mode cible d'un guide d'ondes multimode (105), dans lequel le mode cible présente un profil de mode comprenant une pluralité de points d'énergie dans une disposition prédéterminée et avec des phases prédéterminées, le dispositif de couplage optique (200) comprenant
- un premier élément optique diffractif (202) configuré pour diviser le faisceau lumineux (212) en une pluralité de faisceaux divisés (213), de sorte qu'une disposition de la pluralité de faisceaux divisés (213) corresponde à la disposition prédéterminée de la pluralité de points d'énergie du profil de mode ; et
- un deuxième élément optique diffractif (203) configuré pour modifier une ou plusieurs phases de la pluralité de faisceaux divisés (213) pour produire une pluralité de faisceaux déphasés, dans lequel les phases de la pluralité de faisceaux déphasés correspondent aux phases prédéterminées de la pluralité de points d'énergie du profil de mode, respectivement, et dans lequel la lumière issue de la pluralité de faisceaux déphasés est configurée pour être couplée dans le mode cible du guide d'ondes multimode.

2. Dispositif de couplage optique (200) selon la revendication 1, dans lequel un nombre de faisceaux divisés (213) correspond à un nombre de points d'énergie du profil de mode.

3. Dispositif de couplage optique (200) selon la revendication 2, dans lequel le nombre de points d'énergie du profil de mode est deux, quatre, six ou plus.

4. Dispositif de couplage optique (200) selon l'une quelconque des revendications précédentes, dans lequel le premier et/ou le deuxième élément(s) optique(s) diffractif(s) (201, 202) comprend/comprennent un réseau.

5. Dispositif de couplage optique (200) selon l'une quelconque des revendications précédentes, dans lequel
- le premier élément optique diffractif (202) est configuré pour diviser le faisceau lumineux (212) en la pluralité de faisceaux divisés (213) ayant une pluralité correspondante de différentes directions de propagation, et
- la pluralité de différentes directions de propagation est associée à la disposition prédéterminée de la pluralité de points d'énergie du profil de mode.

6. Dispositif de couplage optique (200) selon la revendication 5, dans lequel
- chaque direction parmi la pluralité de différentes directions de propagation présente un angle d'azimut de la direction par rapport à un axe optique du dispositif de couplage optique (200) ;
- chaque point d'énergie du profil de mode est situé à un angle d'azimut du point correspondant à l'intérieur de la disposition prédéterminée ; et
- l'angle d'azimut de la direction d'une direction correspond à l'angle d'azimut du point du point d'énergie correspondant.

7. Dispositif de couplage optique (200) selon l'une quelconque des revendications précédentes, dans lequel chaque faisceau parmi la pluralité de faisceaux divisés (213) correspond à un point parmi la pluralité de points d'énergie du profil de mode.

8. Dispositif de couplage optique (200) selon l'une quelconque des revendications précédentes, dans lequel une distance entre le premier et le deuxième éléments optiques diffractifs (201, 202) est telle qu'une énergie optique entre une quelconque paire de faisceaux divisés parmi la pluralité de faisceaux divisés (213) est au niveau d'un seuil d'énergie prédéterminé ou est inférieure à celui-ci.

9. Dispositif de couplage optique (200) selon l'une quelconque des revendications précédentes, dans lequel
- le deuxième élément optique diffractif (203) comprend une pluralité d'unités déphasées pour la pluralité de faisceaux divisés (213), respectivement ; et
- une ou plusieurs unités parmi la pluralité d'unités déphasées a/ont un indice de largeur et/ou de réfraction qui diffère des autres unités par la pluralité d'unités déphasées, pour modifier la phase du ou des faisceaux divisés correspondants, par rapport à la phase des autres faisceaux parmi la pluralité de faisceaux divisés.

10. Dispositif de couplage optique (200) selon l'une quelconque des revendications précédentes, dans lequel le deuxième élément optique diffractif (203) est en outre configuré pour rediriger la pluralité de faisceaux déphasés vers un axe optique du dispositif de couplage optique (200), pour produire une pluralité de faisceaux redirigés (214).

11. Dispositif de couplage optique (200) selon la revendication 10, comprenant en outre
- une deuxième lentille (204) configurée pour focaliser la pluralité de faisceaux redirigés (214) sur une pluralité correspondante de points sur une extrémité (115) du guide d'ondes multimode (105) ; et
- une interface de sortie configurée pour fixer l'extrémité (115) du guide d'ondes multimode (105) au niveau d'un axe optique du dispositif de couplage optique (200) à une distance prédéterminée de la deuxième lentille (204).

12. Dispositif de couplage optique (200) selon l'une quelconque des revendications 10 à 11, dans lequel le deuxième élément optique diffractif (203) est configuré pour rediriger la pluralité de faisceaux déphasés vers un axe optique de la deuxième lentille (204).

13. Dispositif de couplage optique (200) selon l'une quelconque des revendications précédentes, comprenant en outre
- une interface d'entrée configurée pour fixer une extrémité (111) du guide d'ondes lumineuses monomode (101) au niveau d'un axe optique du dispositif de couplage optique (200) ; et
- une première lentille (201) configurée pour collimater la lumière émise par l'extrémité (111) du guide d'ondes lumineuses monomode (101), pour produire le faisceau lumineux (212), dans lequel l'interface d'entrée est configurée pour fixer l'extrémité (111) du guide d'ondes lumineuses monomode (101) à une distance prédéterminée de la première lentille (201).

14. Dispositif de couplage optique (200) selon l'une quelconque des revendications précédentes, dans lequel
- le guide d'ondes lumineuses monomode (101) comprend une fibre monomode; et/ou
- le guide d'ondes multimode (105) comprend une fibre multimode ; et/ou
- le guide d'ondes multimode (105) est configuré pour guider une pluralité de groupes de modes optiques, et dans lequel le mode cible correspond à un mode sélectionné parmi les modes d'un groupe de modes optiques.

15. Dispositif de couplage optique (200) configuré pour coupler une pluralité de faisceaux lumineux déphasés issus d'un mode source d'un guide d'ondes multimode dans une sortie de lumière monomode (101), dans lequel la pluralité de faisceaux lumineux déphasés ont des phases prédéterminées et sont disposés selon une disposition prédéterminée, conformément à une pluralité correspondante de points d'énergie d'un profil de mode du mode source, le dispositif de couplage optique (200) comprenant
- un deuxième élément optique diffractif (203) configuré pour modifier une ou plusieurs phases parmi la pluralité de faisceaux déphasés pour produire une pluralité de faisceaux divisés, de sorte que la pluralité de faisceaux divisés aient une phase sensiblement commune et de sorte que la pluralité de faisceaux divisés soient dirigés au niveau d'un axe optique du dispositif de couplage optique (200) ; et
- un premier élément optique diffractif (202) configuré pour rassembler la pluralité de faisceaux divisés (213) dans un faisceau lumineux unique (212), dans lequel la lumière provenant du faisceau lumineux unique (212) est configurée pour être couplée à la sortie de lumière monomode (101).
